(19) Europäisches Patentamt
European Patent Office
Office européen des brevets

(11) **EP 0 870 915 B1**

(12) **EUROPÄISCHE PATENTSCHRIFT**

(45) Veröffentlichungstag und Bekanntmachung des Hinweises auf die Patenterteilung:
**16.01.2002 Patentblatt 2002/03**

(51) Int Cl.[7]: **F02B 37/24**, F02D 33/02

(21) Anmeldenummer: **98104889.5**

(22) Anmeldetag: **18.03.1998**

(54) **Verfahren zur Steuerung des Ladeluftmassenstroms einer Brennkraftmaschine mit einem Abgasturbolader mit verstellbarer Turbinengeometrie**

Method to control/regulate the charged air mass flow of an internal combustion engine with an exhaust gas turbocharger comprising a variable geometry turbine

Procédé pour la commande-régulation du débit de la masse de l'air de suralimentation pour moteur à combustion interne suralimenté à turbocompresseur avec une turbine à géométrie variable

(84) Benannte Vertragsstaaten:
**DE FR GB IT**

(30) Priorität: **12.04.1997 DE 19715236**

(43) Veröffentlichungstag der Anmeldung:
**14.10.1998 Patentblatt 1998/42**

(73) Patentinhaber: **DaimlerChrysler AG**
**70567 Stuttgart (DE)**

(72) Erfinder: **Bischoff, Roland**
**73655 Plüderhausen (DE)**

(56) Entgegenhaltungen:
**EP-A- 0 747 585     DE-C- 4 025 901**
**US-A- 5 123 246**

- **PATENT ABSTRACTS OF JAPAN vol. 011, no. 149 (M-588), 15.Mai 1987 & JP 61 283726 A (MITSUBISHI MOTORS CORP), 13.Dezember 1986,**
- **PATENT ABSTRACTS OF JAPAN vol. 009, no. 142 (M-388), 18.Juni 1985 & JP 60 022032 A (MITSUBISHI JUKOGYO KK), 4.Februar 1985,**
- **PATENT ABSTRACTS OF JAPAN vol. 010, no. 311 (M-528), 23.Oktober 1986 & JP 61 123718 A (MITSUBISHI MOTORS CORP), 11.Juni 1986,**

**Beschreibung**

Die Erfindung betrifft ein Verfahren zur Steuerung des Ladeluftmassenstroms einer Brennkraftmaschine mit einem Abgasturbolader mit verstellbarer Turbinengeometrie im dynamischen Betrieb beim positiven Lastsprung nach dem Oberbegriff des Anspruches 1.

Die Leistungsabgabe einer Brennkraftmaschine ist proportional dem Luftdurchsatz und der Dichte der zugeführten Verbrennungsluft und ist daher durch Aufladung, das heißt durch Vorverdichten der Verbrennungsluft vor dem Eintritt in die Brennkraftmaschine gegenüber einer Brennkraftmaschine ohne Aufladung und dabei gleichem Brennraumvolumen und Drehzahl erhöhbar. Die Aufladung kann durch einen Abgasturbolader erfolgen, welcher im wesentlichen aus zwei Strömungsmaschinen besteht, nämlich einer vom Abgasstrom der Brennkraftmaschine getriebenen Turbine und einem von der Turbine angetriebenen Verdichter, welcher abhängig von seiner Drehzahl einen Frischluftstrom für die Brennkraftmaschine vorverdichtet. Die Turbine und der Verdichter sind durch eine Laderwelle verbunden und rotieren synchron. Der Ladedruck stromab des Verdichters und der Abgasdruck stromauf der Turbine sind infolge des Momentengleichgewichtes an der Laderwelle miteinander gekoppelt, wobei infolge des auf den Verdichter wirkenden Ladedruckes der Abgasstrom stromauf der Turbine aufgestaut wird. Der Staudruck des Abgasstromes wird entsprechend einem Druckübersetzungsverhältnis, welches durch die jeweiligen Strömungsquerschnitte der Turbine und des Verdichters festgelegt ist, in Ladedruck des zur Brennkraftmaschine geförderten Ladeluftstroms übersetzt.

Mit zunehmender Leistung der Brennkraftmaschine nimmt der Ladeluftbedarf zu, so daß ein entsprechend höherer Ladedruck erzeugt werden muß. Mittels einer verstellbaren Turbinengeometrie zum Beispiel durch verstellbare Leitschaufeln der Turbine kann der Anströmquerschnitt der Turbine und somit die vom Abgasturbolader auf den Ladeluftstrom zu übertragende Staudruckenergie variiert werden. Die Turbinengeometrie kann dabei zwischen der öffnungsstellung mit maximalem Anströmquerschnitt und der Schließstellung mit minimalem Anströmquerschnitt jede beliebige Stellung einnehmen. In jedem stationären Betriebszustand der Brennkraftmaschine wird die Turbinengeometrie in eine Stellung mit einem spezifischen Anströmquerschnitt gebracht, die einen Ladeluftdurchsatz mit einem minimalen Kraftstoffverbrauch der Brennkraftmaschine ergibt. Der Anströmquerschnitt wird dabei mit zunehmender Maschinenleistung reduziert, so daß mit einer entsprechend erhöhten Verdichterleistung der Ladedruck und damit der Ladeluftmassenstrom zur Brennkraftmaschine dem jeweils vorliegenden stationären Betriebszustand angepaßt ist.

Im dynamischen Betrieb der Brennkraftmaschine, das heißt beim Lastsprung zwischen zwei stationären Betriebszuständen unter Zunahme der Betriebslast, wird also die Turbinengeometrie entsprechend in eine Stellung mit einem kleineren Anströmquerschnitt für den Abgasstrom gebracht, wobei jedoch bei einer kontinuierlichen Schließbewegung der Turbinengeometrie die erforderliche Beschleunigung des Abgasturboladers zur Erzeugung eines der Lasterhöhung entsprechenden Ladedruckanstieges nicht möglich ist. Ein zu langsamer Aufbau des Ladedruckes während des dynamischen Betriebes führt zu Luftmangelverbrennungen und somit zu einem erhöhten Kraftstoffverbrauch der Brennkraftmaschine und hohen Abgasemissionen.

Um den Abgasturbolader rasch zu beschleunigen ist bekannt, unmittelbar mit der Erhöhung der Lastanforderung die Turbinengeometrie in die Schließstellung zu führen. Der minimale Anströmquerschnitt der Turbine führt zu einem raschen Anstieg des Abgasstaudrucks, so daß infolgedessen die Turbine und somit der Verdichter stark beschleunigt werden. Anschließend wird die Turbine öffnend verstellt und in die vorbekannte Stellung mit einem dem angeforderten stationären Betriebszustand der Brennkraftmaschine entsprechenden Anströmquerschnitt gebracht. Je länger die Turbinengeometrie in Schließstellung gehalten wird, das heißt die maximale Beschleunigung des Verdichters anhält, desto rascher steigt der Ladedruck hinter dem Verdichter. Der Staudruck vor der Turbine steigt jedoch während der Beschleunigung des Abgasturboladers erheblich schneller an als der Ladedruck, so daß es ohne geeignete Gegenmaßnahmen zu einem zu hohen Abgasstaudruck kommt. Der hohe Gegendruck erfordert eine erhöhte Kolbenarbeit zum Ausschub der Abgase, und Gaswechselverluste und damit eine Verschlechterung des Wirkungsgrades der Brennkraftmaschine sind die unmittelbare Folge.

Die DE 40 25 901 C1 schlägt daher ein Verfahren vor, bei dem die Turbinengeometrie zur Steuerung des Ladedruckes unterhalb eines vorgegebenen Grenzwertes des Abgasdruckes vor der Turbine nach einer ersten Kennlinie und bei überschreiten des Grenzabgasdruckes nach einer zweiten Kennlinie eingestellt wird. Die Kennlinien werden aus einer Messung des Ladedruckes ermittelt, wobei die erste Kennlinie der tatsächlichen Ladedruckänderung während der dynamischen Betriebsphase und die zweite Kennlinie einem fiktiven Ladedruckverlauf oberhalb des tatsächlichen Ladedruckanstieges entspricht. Die Umschaltung zwischen den Kennlinien erfolgt durch einen Grenzdruckschalter mit zwei Stellungsmöglichkeiten, welcher vom Abgasdruck beaufschlagt wird und bei Erreichen des vorgegebenen Grenzdruckes die Schalterposition wechselt.

Um das rasche Hochlaufen des Abgasturboladers und damit einen steilen Ladedruckanstieg zu erreichen, wird bei dem bekannten Verfahren die Turbinengeometrie in Schließstellung gehalten, bis der Abgasdruck den Grenzwert erreicht und der Grenzdruckschalter seinen Schaltzustand ändert. Wird anschließend die Turbinengeometrie geöffnet, so stellt sich ein Abfallen des Abgasdruckes ein, wobei jedoch nach Unterschreiten des vorgegebenen Grenzwertes für den Abgasdruck die Turbinengeometrie wieder in Richtung Schließstellung bewegt wird. Mit diesem Regelkreis wird nach einer bestimmten Zeit zwar der angeforderte stationäre Betriebszustand mit der zugehörigen Stellung der Turbinengeometrie erreicht, jedoch wird der Abgasdruck dauernd im Bereich des Grenzwertes gehalten, da bei einem Abweichen des gemessenen Ladedruckes von dem vorgegebenen Soll-Wert die Turbinengeometrie in die Schließstellung geführt wird. Mit dem hohen Abgas-Gegendruck und dem im Vergleich zum Abgasdruck sich langsam aufbauenden Ladedruck ergeben sich ungünstige Spülgefälle zwischen Auslaßtrakt und Einlaßtrakt der Brennkraftmaschine, welche den Gaswechsel erschweren. Das Spülgefälle ist insbesondere in der frühen Phase der Beschleunigung des Abgasturboladers schädlich, in der das bekannte Verfahren keinerlei Maßnahmen zur Reduzierung des Abgas-Gegendruckes und damit zur Erhöhung des Wirkungsgrades der Brennkraftmaschine und in der unmittelbaren Folge der Verringerung des Kraftstoffverbrauches vorsieht.

Der vorliegenden Erfindung liegt die Aufgabe zugrunde, ein Verfahren zur Steuerung des Ladeluftmassenstromes einer Brennkraftmaschine mit einem Abgasturbolader mit verstellbarer Turbinengeometrie zu schaffen, mit dem im dynamischen Betrieb beim Lastsprung zwischen zwei stationären Betriebszuständen der Brennkraftmaschine unter Zunahme der Betriebslast der Wirkungsgrad der Brennkraftmaschine erhöht wird.

Diese Aufgabe wird erfindungsgemäß mit den Merkmalen des Anspruchs 1 gelöst.

Nachdem die Leitvorrichtung der Turbine nach der Lasterhöhung in die Schließstellung gebracht wurde, wobei die Voraussetzungen für eine rasche Beschleunigung des Abgasturboladers und somit zum Anstieg des Ladedruckes geschaffen sind, erfolgt die öffnende Stellbewegung in die vorgegebene Stationärstellung des angeforderten Betriebszustandes der Brennkraftmaschine proportional zum Anstieg des Ladedrukkes. Während des dynamischen Betriebes im Lastsprung befindet sich die Leitvorrichtung bis zum Einnehmen der Stationärstellung grundsätzlich in Stellungen mit gegenüber der angeforderten Stellung geringerem Anströmquerschnitt der Turbine, so daß eine Beschleunigung des Abgasturboladers und eine Erhöhung des Drehmomentes der Brennkraftmaschine erfolgen. Es wird in einer frühen dynamischen Betriebsphase unmittelbar nach der Lasterhöhung, in der die Beschleunigung des Abgasturboladers besonders wichtig ist, der Leitapparat weitgehend geschlossen gehalten, so daß für einen raschen Aufbau des Ladedruckes gesorgt ist. Gleichzeitig wird durch das Aufsteuern der Leitvorrichtung in Abhängigkeit vom Ladedruckanstieg unmittelbar der schädlichen Erhöhung des Abgas-Gegendruckes entgegengewirkt, da durch die zunehmende Öffnung der Leitvorrichtung ein höherer Abgas-Massenstrom durch die Turbine strömen kann und eine Aufstauung in schädlichem Maße vor der Turbine verhindert wird. Die Anstiegsgeschwindigkeit des Abgasdruckes gegenüber der Anstiegsgeschwindigkeit des Ladedruckes, welcher proportional dem Ladeluftmassenstrom ist, wird während der Anstiegsphase des Ladedruckes durch die Stellbewegung der Leitvorrichtung auf ein Minimum reduziert und somit der Wirkungsgrad der Brennkraftmaschine in dieser Betriebsphase wesentlich erhöht.

Das Verfahren zur Steuerung des Ladeluftmassenstroms wird nachstehend anhand der Zeichnung näher erläutert. Es zeigen:

Fig. 1 in schematischer Darstellung eine Vorrichtung zur Durchführung des Verfahrens,

Fig. 2a bis 2d in graphischer Darstellung den zeitlichen Verlauf verschiedener Betriebsparameter der Brennkraftmaschine bei Anwendung des Steuerverfahrens des Ladeluftmassenstroms.

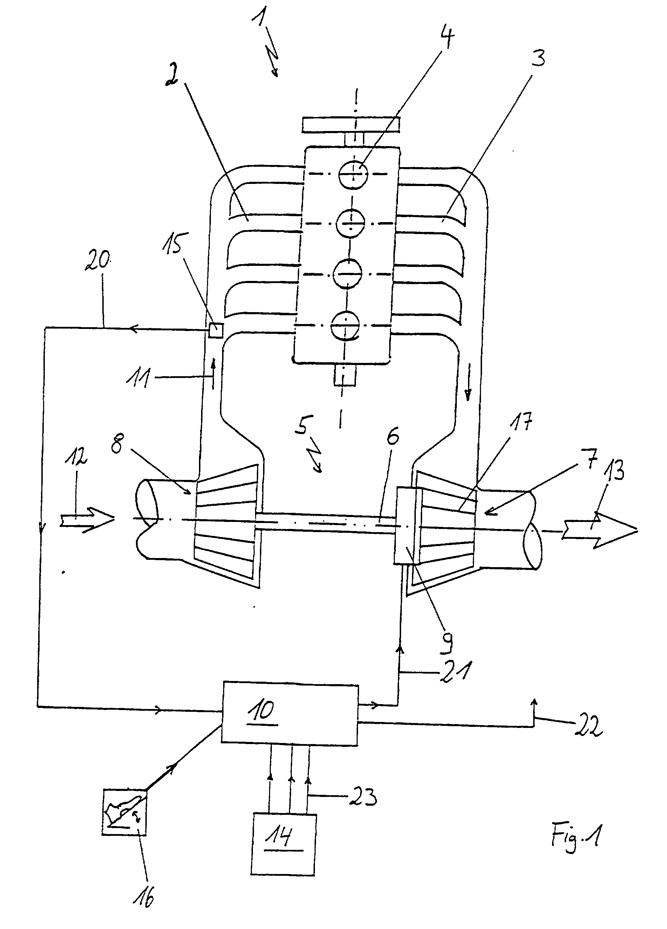

Fig. 1 zeigt eine Brennkraftmaschine 1 mit einem Abgasturbolader 5 zur Erzeugung eines verdichteten Ladeluftmassenstroms 11 im Einlaßtrakt 2 der Brennkraftmaschine 1. Der Abgasturbolader 5 besteht aus einer Turbine 7, welche im Auslaßtrakt 3 der Brennkraftmaschine 1 angeordnet ist und vom Abgasstrom 13 beaufschlagt und angetrieben wird, und einem Verdichter 8 im Einlaßtrakt 2. Beide Strömungsmaschinen (Turbine 7/Verdichter 8) sind durch eine Laderwelle 6 mechanisch verbunden und laufen daher synchron um. Die Strömungsenergie des Abgasstromes 13 wird entsprechend dem Verhältnis zwischen Abgasstaudruck vor der Turbine 7 und Ladedruck stromab des Verdichters, das heißt in Abhängigkeit von dem Verhältnis der jeweiligen Strömungsquerschnitte der Turbine 7 und des Verdichters 8 auf den vom Verdichter 8 angesaugten Frischluftstrom 12, übertragen.

Um mit zunehmender Betriebslast der Brennkraftmaschine einen zunehmend höheren Ladedruck zu erzeugen und damit einen höheren Ladeluftmassenstrom 11 zu fördern, ist der Anströmquerschnitt der Turbine 7 durch eine verstellbare Turbinengeometrie verringerbar. Ein Stellantrieb 9 wirkt auf eine verstellbare Leitvorrichtung 17 der Turbine 7, zum Beispiel verstellbare Leitschaufeln, ein. Dabei wird ein Anströmquerschnitt der Turbine 7 zur Beaufschlagung mit dem Abgasstrom 13 freigegeben, welcher mit dem festgelegten Strömungsquerschnitt des Verdichters 8 ein bestimmtes Druckübersetzungsverhältnis bildet, mit dem der in einem beliebigen stationären Betriebszustand der Brennkraftmaschine 1 erforderliche Ladedruck im Einlaßtrakt 2 erzeugt wird. Dem Stellantrieb 9 wird zur Einstellung der Turbinengeometrie ein Stellsignal 21 zugeführt, welches von einer Steuereinheit 10 in Abhängigkeit von der Lastanforderung 16 an die Brennkraftmaschine 1, zum Beispiel durch ein Fahrpedal, erzeugt wird. Jedem stationären Betriebszustand der Brennkraftmaschine 1 ist ein bestimmter Anströmquerschnitt der Turbine 7 zugeordnet, welcher mit zunehmender Betriebslast abnimmt, so daß mit einer Verstärkung der Aufstauung des Abgasstromes 13 vor der Turbine 7 die Drehzahl des Abgasturboladers 5 und somit die Verdichterleistung erhöht ist. Die jeweils einem bestimmten stationären Betriebszustand der Brennkraftmaschine 1 zugeordneten Einstellungen der Leitvorrichtung 17 und damit der Anströmquerschnitte der Turbine 7 sind in einem Kennfeld 14 abgelegt, dem die Steuereinheit 10 die der jeweils vorliegenden Lastanforderung 16 entsprechenden Kennfelddaten 23 entnimmt.

Bei einem positiven Lastsprung, das heißt bei einer Erhöhung der Lastanforderung 16, wird, um den Abgasturbolader 5 rasch zu beschleunigen und damit eine möglichst schnelle Erhöhung der Förderleistung des Verdichters 8 zu erreichen, die Leitvorrichtung 17 zunächst in Schließstellung mit minimalem Anströmquerschnitt der Turbine 7 gebracht.

Das Stellsignal 21 der Steuereinheit ist elektrisch, wobei die Stromstärke proportional dem Stellweg des Stellantriebes 9 ist. Der Stellantrieb 9 wirkt beispielsweise pneumatisch auf die Leitvorrichtung 17 der Turbine 7 und verfügt über ein Proportionalventil, welche entsprechend der Stromstärke des zugeführten Stellsignals 21 die Verstellung der Leitvorrichtung 17 steuert. Der Stellantrieb kann aber auch ein Elektromotor sein, der eine Stellbewegung proportional dem zugeführten Stellsignal 21 ausführt.

Anschließend wird die Leitvorrichtung 17 kontinuierlich aus der Schließstellung in die vorgegebene Stationärstellung verstellt. Die öffnende Stellbewegung erfolgt dabei proportional zum Anstieg des Ladedrucks im Einlaßtrakt 2 der Brennkraftmaschine 1. Ein Drucksensor 15 ist stromab des Verdichters 8 im Einlaßtrakt 2 eingeordnet und erzeugt fortlaufend ein Ladedrucksignal 20, welches der Steuereinheit 20 zugeführt wird. Der Verstellweg der Leitvorrichtung 17 aus der Schließstellung in die Stationärstellung des angeforderten Betriebszustandes der Brennkraftmaschine 1 wird proportional dem Ausgangsladedruck vor Beginn der öffnenden Stellbewegung bis zum Erreichen des dem angeforderten Betriebszustand vom Kennfeld 14 vorgegebenen Soll-Ladedruck gesteuert.

In vorteilhafter Weise wird die Leitvorrichtung nicht unmittelbar aus der Schließstellung öffnend verstellt, sondern in der Schließstellung gehalten, bis ein laufend ermittelter Betriebsparameter der Brennkraftmaschine 1 einen vorbekannten Soll-Wert erreicht. Damit wird verhindert, daß unmittelbar nach der Erhöhung der Lastanforderung 16 und der Überführung der Leitvorrichtung 17 in die Schließstellung eine Luftmangelverbrennung in den Zylindern 4 der Brennkraftmaschine 1 verursacht wird. Im Moment des Lastsprunges steigt die einzuspritzende Kraftstoffmenge, und es muß möglichst rasch der Ladeluftmassenstrom 11 erhöht werden, um Kraftstoff/Luft-Gemische in den Zylindern 4 mit günstigen Luftzahlen zu bilden. Mit der Schließstellung der Leitvorrichtung 17 und dem damit verbundenen minimalen Anströmquerschnitt der Turbine 7 ist die größtmögliche Beschleunigung des Abgasturboladers 5 möglich, um rasch den zur Bereitstellung des notwendigen Ladeluftmassenstroms 11 erforderlichen Ladedruck im Einlaßtrakt 2 zu erzeugen. Die Steuereinheit ermittelt als Betriebsparameter der Brennkraftmaschine 1 das aktuelle Luftverhältnis $\lambda$ des Ladeluftmassenstromes 11 und einer Kraftstoff-Einspritzmenge pro Arbeitsspiel der Brennkraftmaschine. Der Ist-Wert des Ladeluftmassenstromes 11 ist dabei durch das Ladedrucksignal 20 der Steuereinheit 10 bekannt. Die Kraftstoff-Einspritzmenge wird mit einem Einspritzsignal 22 für die Brennkraftmaschine gesteuert, welches unter Zugrundelegung von Kennfelddaten 23 von der Steuereinheit 10 selbst erzeugt wird, so daß die Steuereinheit 10 auch den aktuellen Kraftstoffanteil bei der Gemischbildung kennt. Gleichzeitig wird dem Kennfeld 14 ein bestimmtes Grenzluftverhältnis entnommen, welches als Soll-Wert für die Verschlußphase (Schließstellung) der Leitvorrichtung 17 vorgegeben wird. Durch das rasche Ansteigen des Ladedrucks übersteigt das ermittelte Luftverhältnis $\lambda$ schnell den vorgegebenen Grenzwert, wobei dann die öffnende Stellbewegung der Leitvorrichtung 17 von der Steuereinheit 10 veranlaßt wird.

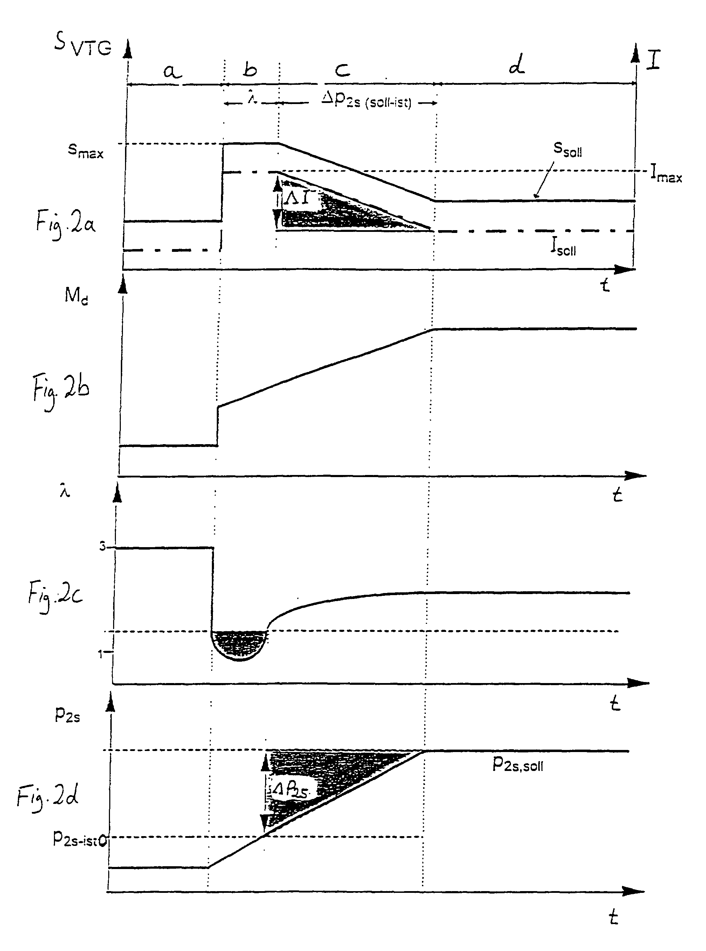

Die Wirkungsweise des beschriebenen Verfahrens zur Steuerung des Ladeluftmassenstroms 11 verdeutlichen die Schaubilder der Figuren 2a bis 2d mit Betriebsparametern der Brennkraftmaschine 1 über der Betriebszeit t während des Lastsprunges zwischen zwei stationären Betriebszuständen. Dabei werden vier Betriebsphasen a, b, c, d unterschieden, wobei sich die Brennkraftmaschine in den Phasen a und d jeweils in einem stationären Betriebszustand befindet. Die Betriebslast ist in Phase d höher, und in den Phasen b und c wird der Ladedruck im Einlaßtrakt der Brennkraftmaschine erhöht und der Ladeluftmassenstrom durch Veränderung des Anströmquerschnittes der Turbine gesteuert. Fig. 2a zeigt den Verstellweg $S_{VTG}$ der Leitvorrichtung der Turbine, wobei $S_{max}$ den maximalen Verstellweg mit minimalem Anströmquerschnitt der Turbine darstellt. In der Betriebsphase a befindet sich die Turbinenleitvorrichtung in einer Stellung, die im Hinblick auf optimalen Kraftstoffverbrauch der Brennkraftmaschine von einem Kennfeld vorgegeben wird. Wird nun die Lastanforderung erhöht, so wird entsprechend der Ladeluftmassenstrom mit dynamischen Steuermaßnahmen der variablen Turbinengeometrie des Abgasturboladers in den Phasen b und c gesteuert, bis letztlich der angeforderte stationäre Betriebszustand in der Phase d mit einem Verstellweg $S_{Soll}$ der Leitvorrichtung erreicht wird. In der Betriebsphase d ist entsprechend der erhöhten Last der Brennkraftmaschine das Drehmoment $M_d$ (Fig. 2b) und der Ladedruck $p_{2s}$ (Fig. 2d) gegenüber der Betriebsphase a erhöht. Im Moment des Lastsprunges wird die Leitvorrichtung der Turbine in die Schließstellung überführt und dabei gleichzeitig die eingespritzte Kraftstoffmenge erhöht, was sich in einem sprunghaften Anstieg des Funktionsverlaufes des Drehmomentes $M_d$ in Fig. 2b äußert. Dabei fällt gleichzeitig das Luftverhältnis $\lambda$ des aus Kraftstoff und Ladeluft gebildeten Gemisches, wie Fig. 2c zeigt. Die Leitvorrichtung wird während der Betriebsphase b in Schließstellung mit dem Verstellweg $S_{max}$ gehalten, wodurch der Ladedruck $P_{2s-Ist}$ (Fig. 2b) und infolgedessen auch das Luftverhältnis $\lambda$ rasch steigt. Erreicht das ermittelte Luftverhältnis $\lambda$ einen aus dem Kennfeld vorgegebenen Grenzwert, der in Fig. 2c mit einer gestrichelten Linie angedeutet ist, so veranlaßt die Steuereinheit eine öffnende Stellbewegung der Leitvorrichtung in der Betriebsphase c.

Die Einstellung bzw. die Verstellung der Leitvorrichtung der Turbine erfolgt in Abhängigkeit von der Stromstärke I eines von der Steuereinheit erzeugten Stellsignals. Der zeitliche Verlauf der Stromstärke des Stellsignals entspricht qualitativ dem Stellweg der Leitvorrichtung und ist in Fig. 2a strichpunktiert dargestellt. Die öffnende Stellbewegung der Leitvorrichtung erfolgt proportional dem Anstieg des Ladedruckes $p_{2s}$, wobei der Proportionalitätsfaktor durch das Verhältnis des zurückzulegenden Stellweges aus der Schließstellung in die angeforderte Stationärstellung entsprechend der Differenz $\triangle I$ der zugeordneten Signalstromstärken und dem Ladedruckunterschied $\Delta p_{2s}$ bis zum Erreichen des erforderlichen Ladedruckwertes $p_{2s-Soll}$ definiert ist. Der Ladedruckunterschied $\Delta p_{2s}$, welcher der Steuerung der Leitvorrichtung und damit des Ladeluftmassenstromes zugrunde gelegt wird, wird festgelegt durch den Ausgangsladedruck $P_{2s0}$ beim Beginn der Öffnungsbewegung der Leitvorrichtung. Es kann jedoch auch als Ausgangsladedruck zur Ermittlung der herzustellenden Ladedruckdifferenz bis zum Erreichen des angeforderten stationären Soll-Ladedruckes $p_{2s-Soll}$ der im Moment des Lastsprunges vor dem Verschließen der Leitvorrichtung herrschende Ladedruck angenommen werden. Dabei ergibt sich ein steilerer Anstieg des Ladedruckes $p_{2s}$ entsprechend dem größeren Proportionalitätsfaktor infolge des größeren, während der öffnenden Stellbewegung der Leitvorrichtung zu überwindenden Ladedruckunterschiedes $\Delta p_{2s}$.

Das während der öffnenden Steuerphase t von der Steuereinheit zu erzeugende Stellsignal , das heißt dessen Stromstärke I, wird mit dem Ausgangsladedruck und dem momentan herrschenden Ladedruck $P_{2s-Ist}$, welcher vom Drucksensor im Einlaßtrakt der Brennkraftmaschine ermittelt wird, mit vorgegebenen Kennfeld-Soll-Werten (Soll-Ladedruck $p_{2s-Soll}$, maximale Stromstärke $I_{max}$ in der Schließstellung der Leitvorrichtung und Soll-Stromstärke $I_{Soll}$ im angeforderten Betriebszustand) nach der folgenden Größengleichung ermittelt:

$$I = I_{Soll} + (I_{max} - I_{Soll}) \cdot \frac{P_{2s-Soll} - P_{2s-Ist}}{P_{2s-Soll} - P_{2s0}}$$

Als Betriebsparameter zur Bestimmung der Dauer der Verschlußphase b, in der die Leitvorrichtung in Schließstellung gehalten wird, kann alternativ zum Luftverhältnis $\lambda$ die pro Arbeitsspiel der Brennkraftmaschine eingespritzte Kraftstoffmenge ermittelt werden. Dabei wird im Kennfeld jedem Ladedruckwert $P_{2s-Ist}$ eine maximal mögliche Kraftstoff-Einspritzmenge zugeordnet, bei der mit dem momentanen Ladeluftmassenstrom rauchfrei verbrennende Gemische gebildet werden. Mit dem Anstieg des Ladedruckes $P_{2s}$ bei geschlossener Turbinenleitvorrichtung nimmt auch die Einspritzmenge zu, und die Steuereinheit veranlaßt dann die gesteuerte Öffnungsbewegung der Leitvorrichtung, wenn der Ladedruck einen Wert erreicht, bei dem bereits die dem angeforderten stationären Betriebszustand der Brennkraftmaschine zugeordnete Einspritzmenge zumessbar ist.

**Patentansprüche**

1. Verfahren zur Steuerung des Ladeluftmassenstroms (11) einer Brennkraftmaschine (1) mit einem Abgasturbolader (5) mit verstellbarer Turbinengeometrie im dynamischen Betrieb beim Lastsprung zwischen zwei stationären Betriebszuständen der Brennkraftmaschine (1) unter Zunahme der Betriebslast und einer entsprechend vorbestimmten Verringerung des Anströmquerschnitts der Turbine (7), wobei eine Leitvorrichtung (17) der Turbine (7) zunächst in Richtung Schließstellung mit minimalem Anströmquerschnitt und anschließend öffnend verstellt wird, und wobei der Ladedruck (p2s-Ist) im Einlaßtrakt (2) der Brennkraftmaschine (1) ermittelt wird, **dadurch gekennzeichnet, daß** die Leitvorrichtung (17) in die Schließstellung gebracht wird und anschließend die öffnende Stellbewegung der Leitvorrichtung (17) aus der Schließstellung in die vorgegebene Stationärstellung proportional zum Anstieg des Ladedrucks (p2s-Ist) von einem Ausgangsladedruck (p2s0) bis zum Erreichen eines für den angeforderten stationären Betriebszustand der Brennkraftmaschine vorgegebenen Soll-Ladedrucks (p2s-Soll) erfolgt.

2. Verfahren nach Anspruch 1, **dadurch gekennzeichnet, daß** die Leitvorrichtung in Schließstellung gehalten wird, bis ein laufend ermittelter Betriebsparameter der Brennkraftmaschine einen vorbekannten Sollwert erreicht.

**3.** Verfahren nach Anspruch 2,
**dadurch gekennzeichnet, daß** als Betriebsparameter ein aktuelles Luftverhältnis (λ) des Ladeluftmassenstroms (11) und einer Kraftstoff-Einspritzmenge pro Arbeitsspiel der Brennkraftmaschine ermittelt wird und ein bestimmtes Grenzluftverhältnis als Sollwert vorgegeben wird.

**4.** Verfahren nach Anspruch 2,
**dadurch gekennzeichnet, daß** als Betriebsparameter jedem Ladedruck eine mit dem Anstieg des Ladedrucks ($p_{2s-Ist}$) zunehmende Kraftstoff-Einspritzmenge zugeordnet wird, wobei als Sollwert eine dem angeforderten stationären Betriebszustand der Brennkraftmaschine (1) zugeordnete Einspritzmenge vorgegeben wird.

**5.** Verfahren nach Anspruch 1 oder einem der Ansprüche 2 bis 4,
**dadurch gekennzeichnet, daß** die vorzugebenden Sollwerte einem Kennfeld (14) entnommen werden.

**6.** Verfahren nach einem der Ansprüche 2 bis 5,
**dadurch gekennzeichnet, daß** der Ausgangsladedruck ($p_{2s0}$) beim Beginn der öffnungsbewegung der Leitvorrichtung (17) ermittelt wird.

**Claims**

**1.** A process for controlling the charge-air mass flow rate (11) in an internal combustion engine (1) with a turbocharger (5) with adjustable turbine geometry in dynamic operation during load alteration between two stationary operating states of the internal combustion engine (1) whilst increasing the operating load and effecting a correspondingly predetermined reduction in the flow cross-section of the turbine (7), with a guide device (17) in the turbine (7) first being adjusted towards the closed position with minimal flow cross-section and then being opened, and with the charging pressure (p2s-actual) being determined in the inlet train (2) of the internal combustion engine (1),
**characterised in that**
the guide device (17) is moved to the closed position and then opened from the closed position to the specified stationary position proportional to the increase in charging pressure (p2s-actual) from an initial charging pressure (p2s0) until it reaches a reference charging pressure (p2s-reference) specified for the required stationary operating state of the internal combustion engine.

**2.** A process in accordance with claim 1,
**characterised in that**
the guide device is held in the closed position until a continually determined operating parameter for the internal combustion engine reaches a previously known reference value.

**3.** A process in accordance with claim 2,
**characterised in that**
a current air ratio (λ) between the charge-air mass flow rate (11) and a fuel injection volume per working cycle of the internal combustion engine is determined as the operating parameter and a specific limit air ratio is specified as the reference value.

**4.** A process in accordance with claim 2,
**characterised in that**
a fuel injection volume which increases as the charging pressure ($P_{2s-actual}$) increases is allocated to each charging pressure as the operating parameter, with an injection volume allocated to the required stationary operating state of the internal combustion engine being specified as the reference value.

**5.** A process in accordance with claim 1 or one of claims 2 to 4,
**characterised in that**
the reference values to be specified are taken from a characteristic map (14).

**6.** A process in accordance with one of claims 2 to 5,
**characterised in that**
the initial charging pressure ($P_{2s0}$) is determined at the start of the opening movement of the guide device (17).

**Revendications**

**1.** Procédé pour la commande de l'écoulement massique d'air (11) chargé dans un moteur à combustion interne (1) avec un turbocompresseur (5) à gaz d'échappement avec géométrie variable de turbine en service dynamique lors du saut de charge entre deux états de fonctionnement stationnaires du moteur à combustion interne (1) lors d'une augmentation de la charge en fonctionnement, et réduction prédéterminée correspondante de la section d'entrée de la turbine (7), dans lequel un dispositif de guidage (17) de la turbine (7) est tout d'abord déplacé en direction de la position de fermeture avec section d'entrée minimum, et ensuite déplacé en sens d'ouverture, et dans lequel la pression de chargement (p2s-réelle) dans le circuit d'admission (2) du moteur à combustion interne (1) est déterminée, **caractérisé en ce que** le dispositif de guidage (17) est amené dans la position de fermeture, et **en ce que** le mouvement de positionnement en sens d'ouverture du dispositif de guidage (17) hors de la position de fermeture jusque dans la position stationnaire prédéterminée a lieu proportionnellement à la montée de la pression de chargement (p2s-réelle) depuis une pression de chargement de départ (p2s0) jusqu'à atteindre une pression de chargement de consigne (p2s-consigne) prédéterminée pour l'état de fonctionnement stationnaire requis du moteur à combustion interne.

2. Procédé selon la revendication 1, **caractérisé en ce que** le dispositif de guidage est maintenu dans la position de fermeture jusqu'à ce qu'un paramètre de fonctionnement, déterminé en continu, du moteur à combustion interne, ait atteint une valeur de consigne prédéterminée.

3. Procédé selon la revendication 2, **caractérisé en ce que** l'on détermine, à titre de paramètre de fonctionnement, un rapport d'air actuel ($\lambda$) de l'écoulement massique d'air (11) et d'une quantité de carburant injectée par cycle de travail du moteur à combustion interne, et **en ce que** l'on impose à titre de valeur de consigne un rapport d'air limite déterminé.

4. Procédé selon la revendication 2, **caractérisé en en ce que**, à titre de paramètre de fonctionnement, on associe à chaque pression de chargement une quantité de carburant injectée qui augmente avec la montée de la pression de chargement (p2s-réelle), et en ce que l'on impose à titre de valeur de consigne une quantité d'injection associée à l'état de fonctionnement stationnaire requis du moteur à combustion interne (1).

5. Procédé selon la revendication 1, ou selon l'une des revendications 2 à 4, **caractérisé en ce que** les valeurs de consigne imposées sont prélevées dans un champ de caractéristiques (14).

6. Procédé selon l'une des revendications 2 à 5, **caractérisé en ce que** la pression de chargement de départ (p2s0) est déterminée au commencement du mouvement d'ouverture du dispositif de guidage (17).

Fig.1

Fig. 2a

Fig. 2b

Fig. 2c

Fig. 2d